# EUROPEAN PATENT SPECIFICATION

(11) **EP 4 328 079 B1**
(45) Date of publication and mention of the grant of the patent: **13.08.2025**
(21) Application number: 23189660.6
(22) Date of filing: 04.08.2023
(51) Int. Cl.: B60L 53/63, B60L 53/66, B60L 53/68, B60L 55/00, G06Q 10/0631, G06Q 30/0601, G06Q 50/06, G07C 5/00, G07F 15/00, G06Q 30/0241, G06Q 50/40, G06Q 30/0251

(54) **SERVER, SYSTEM, AND METHOD TO REDUCE DISPLAY OF ADVERTISEMENTS**
SERVER, SYSTEM UND VERFAHREN ZUR REDUZIERUNG DER ANZEIGE VON WERBUNGEN
SERVEUR, SYSTÈME ET PROCÉDÉ POUR RÉDUIRE L'AFFICHAGE DES PUBLICITÉS

(30) Priority: 26.08.2022 JP 2022134847
(43) Date of publication of application: 28.02.2024
(73) Proprietor: TOYOTA JIDOSHA KABUSHIKI KAISHA, Toyota-shi, Aichi-ken, 471 8571 (JP)
(72) Inventor: YUMITA, Osamu, TOYOTA-SHI, AICHI-KEN, 471-8571 (JP); ONISHI, Yoichi, TOYOTA-SHI, AICHI-KEN, 471-8571 (JP); ANDO, Toru, TOYOTA-SHI, AICHI-KEN, 471-8571 (JP); SUZUKI, Ikuma, TOYOTA-SHI, AICHI-KEN, 471-8571 (JP); NAGATA, Yu, TOYOTA-SHI, AICHI-KEN, 471-8571 (JP)
(74) Representative: Cabinet Beau de Loménie

(56) References cited:
- DE-A1- 102021 205 890
- JP-A- 2007 068 164
- US-A1- 2011 204 847
- US-B1- 10 943 255
- US-B1- 9 104 537
- US-B2- 10 511 171
- US-B2- 8 710 798

## Description

### BACKGROUND OF THE INVENTION

### 1. Field of the Invention

The disclosure relates to a server, a system, and a method.

### 2. Description of Related Art

Japanese Unexamined Patent Application Publication No. 2021-129441 (JP 2021-129441 A) describes a server that controls charge and discharge of electric power between an electrified vehicle and a charge-discharge station that are connected to each other. Power demand in a power grid is leveled through the charge and discharge.

US 8,710,798 B2 shows a method of operating an electric vehicle charging station ("EVCS") or electric vehicle supply equipment ("EVSE"), comprising, with computing hardware at the EVCS or EVSE, receiving an indication at the EVCS or EVSE of a parking space at which a user of the EVCS or EVSE desires to park; determining if the parking space indicated by the user is associated with an electric vehicle charging port; and if the parking space indicated by the user is associated with an electric vehicle charging port, determining whether the user is authorized to use the EVCS or EVSE; and if the user is authorized to use the EVCS or EVSE, controlling a charging operation that provides an electric charge via the electric vehicle charging port; and if the parking space indicated by the user is not associated with an electric vehicle charging port, determining whether the user is authorized to use the parking space not associated with the electric vehicle charging port, and providing the user with an indication that the user is authorized to use the parking space not associated with the electric vehicle charging port.

US 9,104,537 B1 shows a server according to the preamble of claim 1.

### SUMMARY OF THE INVENTION

Generally, for the purpose of leveling power demand in a power grid or other purposes, it is desired to facilitate charge and discharge (power control) with an electrified vehicle. There is room for improvement in that the server of JP 2021-129441 A is not considered to facilitate charge and discharge with an electrified vehicle.

The disclosure provides a server, a system, and a method capable of facilitating power control (charge and discharge) with an electrified vehicle.

A first aspect of the disclosure relates to the server of claim 1.

With the server according to the first aspect of the disclosure, when the electrified vehicle accedes to a request to perform the power control as described above, a program command to reduce display of advertisements on the terminal as compared to when the electrified vehicle does not accede to the request to perform the power control is generated. Here, since display of advertisements with the terminal is reduced, stress of a user due to the advertisements is reduced when the user uses the Internet service with the terminal. Thus, the user of the electrified vehicle can be caused to actively perform the power control. As a result, it is possible to facilitate the power control with the electrified vehicle.

With a function to increase a degree to which distribution of the advertisements is reduced as a degree of contribution of the power control with the electrified vehicle increases, a user of the electrified vehicle further actively performs the power control, it is possible to further facilitate the power control with the electrified vehicle.

Furthermore, with a function to increase a degree to which distribution of the advertisements is reduced as a request to adjust demand and supply of electric power in at least one of a time period and a region in which the power control is performed increases, the power control in at least one of a time period and a region in which there is a strong request to adjust demand and supply of electric power is facilitated, it is possible to easily satisfy the request to adjust demand and supply of electric power.

Increasing a degree to which the distribution of advertisements is reduced as a percentage of regenerated energy in electric power stored in the electrified vehicle that performs the power control increases allows facilitating the power control using regenerated energy.

In the server according to the first aspect, the control unit may be configured to reduce the distribution of advertisements in a time period or a period set by the user. With this configuration, the user is able to reduce advertisements at selected timing. As a result, it is possible to improve the convenience of the control to reduce advertisements for the user.

A second aspect of the disclosure relates to the system of claim 4.

With the system according to the second aspect of the disclosure, when the electrified vehicle accedes to a request to perform the power control as described above, a program command to reduce display of advertisements on the terminal as compared to when the electrified vehicle does not accede to the request to perform the power control is generated. Thus, it is possible to provide the system capable of facilitating the power control with the electrified vehicle.

A third aspect of the disclosure relates to the method of claim 5.

With the method according to the third aspect of the disclosure, when the electrified vehicle accedes to a request to perform the power control as described above, display of advertisements on the terminal is reduced as compared to when the electrified vehicle does not accede to the request to perform the power control. Thus, it is possible to provide the method capable of facilitating the power control with the electrified vehicle.

According to the aspects of the disclosure, it is possible to facilitate the power control (charge and discharge) with the electrified vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the configuration of a system according to an embodiment;
FIG. 2 is a view that shows data to be distributed when the electrified vehicle accedes to a request to perform power control (reference example) and when the electrified vehicle does not accede to the request to perform the power control (comparative example);
FIG. 3 is a view that shows that, additionally, data to be distributed changes according to a request to adjust demand and supply of electric power;
FIG. 4 is a view that shows that, additionally, data to be distributed changes according to the amount of charge or discharge or the like in the power control;
FIG. 5 is a view that shows that data to be distributed changes according to the percentage of regenerated energy in the electrified vehicle; and
FIG. 6 is a sequence diagram that shows a method of reducing advertisements according to the embodiment.

### DETAILED DESCRIPTION OF EMBODIMENTS

Hereinafter, an embodiment of the disclosure will be described in detail with reference to the accompanying drawings. Like reference signs denote the same or corresponding portions in the drawings, and the description thereof will not be repeated.

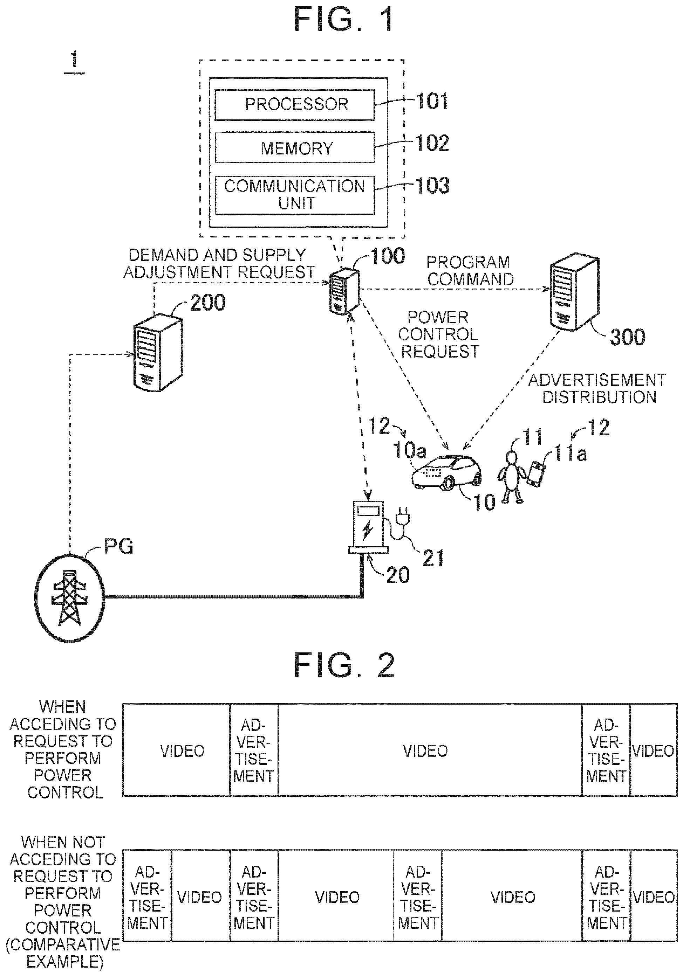

FIG. 1 is a diagram that shows the configuration of a system 1 according to the embodiment of the disclosure. The system 1 includes a server 100, a system management server 200, a distribution management server 300, an electric power system PG, an electrified vehicle 10, and an electric vehicle supply equipment (EVSE) 20. The server 100 is an example of a server and a first server according to the disclosure. The distribution management server 300 is an example of a second server according to the disclosure.

The electric power system PG is a power grid constructed of a power plant (not shown) and a power collection system (not shown). In the embodiment, a power company serves as both a power generation operator and a power transmission and distribution operator. The power company corresponds to a general power transmission and distribution operator and maintains and manages the electric power system PG. The power company corresponds to a manager of the electric power system PG.

The system management server 200 manages demand and supply of electric power in the electric power system PG (power grid). The system management server 200 belongs to the power company. The system management server 200 sends a request to adjust power demand of the electric power system PG (demand and supply adjustment request) to the server 100 based on generated electric power and consumed electric power of power adjustment resources that the system management server 200 manages. Specifically, the system management server 200 sends a request to increase or reduce power demand as compared to during normal times to the server 100 when generated electric power or consumed electric power of the power adjustment resources is expected to be greater (or greater at current point in time) than normal times.

The server 100 is a server that an aggregator manages. The aggregator is an electric power supplier that binds a plurality of power adjustment resources in a region, a predetermined facility, or the like and provides an energy management service. The server 100 manages power control (described later).

The server 100 makes a request of the electrified vehicle 10 to perform power control as one of manners to increase or reduce the power demand of the electric power system PG. Power control is control including power supply to the electric power system PG (external power supply) and charge from the electric power system PG (external charging). The server 100 sends a request signal to make the request of the electrified vehicle 10, to the electrified vehicle 10 or a mobile terminal 11a or the like owned by a user 11 of the electrified vehicle 10.

Power control is performed between the electrified vehicle 10 and the electric power system PG via the EVSE 20. Examples of the electrified vehicle 10 include a plug-in hybrid electric vehicle (PHEV), a battery electric vehicle (BEV), and a fuel cell electric vehicle (FCEV). The electrified vehicle 10 includes a vehicle mount terminal such as a car navigation system 10a. The electrified vehicle 10 may be configured to be capable of only one of external power supply and external charging. The electrified vehicle 10 may include a data communication module (DCM) or may include a communication I/F that supports a fifth generation mobile communication system (5G).

The mobile terminal 11a is an example of a terminal according to the disclosure. The car navigation system 10a is another example of the terminal according to the disclosure. Hereinafter, the mobile terminal 11a and the car navigation system 10a are referred to as terminals 12 when not distinguished from each other.

The EVSE 20 means a vehicle power supply equipment. The electrified vehicle 10 is configured to be electrically connectable with the EVSE 20. When, for example, a charging cable 21 connected to the EVSE 20 is connected to an inlet of the electrified vehicle 10, electric power is allowed to be exchanged between the EVSE 20 and the electrified vehicle 10.

The server 100 is configured to manage information on a plurality of electrified vehicles 10 registered (hereinafter, also referred to as vehicle information), information on users registered (hereinafter, also referred to as user information), and information on EVSEs 20 registered (hereinafter, also referred to as EVSE information). The user information, the vehicle information, and the EVSE information are identified with identification information (ID) and stored in a memory 102 (described later).

A user ID is identification information for identifying a user and also functions as information (terminal ID) that identifies a mobile terminal 11a carried by the user. The server 100 is configured to save information received from mobile terminals 11a user ID by user ID. The user information includes the communication address of a mobile terminal 11a carried by a user, and a vehicle ID of an electrified vehicle 10 that belongs to the user.

A vehicle ID is identification information for identifying an electrified vehicle 10. The vehicle ID may be a license plate or may be a vehicle identification number (VIN). The vehicle information includes an activity schedule of each electrified vehicle 10.

An EVSE-ID is identification information for identifying an EVSE 20. The EVSE information includes the communication address of each EVSE 20 and a state of an electrified vehicle 10 connected to the EVSE 20. The EVSE information also includes information indicating a combination of an electrified vehicle 10 and an EVSE 20 connected to each other (for example, a combination of an EVSE-ID and a vehicle ID).

The distribution management server 300 manages a service to distribute a video available to be viewed on the terminal 12 of the user 11 of the electrified vehicle 10. The distribution management server 300 manages distribution of advertisements in the video. A video distribution service is an example of an Internet service according to the disclosure.

The server 100 includes a processor 101, the memory 102, and a communication unit 103. The processor 101 is an example of a control unit according to the disclosure. The communication unit 103 is an example of an acquisition unit according to the disclosure.

The memory 102 stores not only a program to be run on the processor 101 but also information to be used by the program (for example, maps, mathematical expressions, and various parameters). The communication unit 103 includes various communication I/Fs. The processor 101 controls the communication unit 103. Specifically, the processor 101 communicates with the system management server 200, the DCM (or the mobile terminal 11a) of the electrified vehicle 10, the EVSE 20, and the distribution management server 300 through the communication unit 103.

The communication unit 103 acquires information on power control with the electrified vehicle 10. Specifically, the communication unit 103 acquires information on the amount of charge or discharge, a charge or discharge time, a time period in which charge or discharge is performed, and the like between the electrified vehicle 10 and the EVSE 20, subjected to power control.

The processor 101 controls display during use of a video distribution service with the terminal 12 of the user 11.

Here, it is desired for an existing system to facilitate power control with an electrified vehicle. In the present embodiment, the processor 101 is configured to, when the electrified vehicle 10 accedes to a request to perform power control, generate a program command to reduce display of advertisements on the terminal 12 as compared to when the electrified vehicle 10 does not accede to the request to perform the power control. The program command is sent from the server 100 to the distribution management server 300.

Thus, as shown in FIG. 2, a frequency at which an advertisement is displayed on the terminal 12 of the user 11 who accedes to a request to perform power control is set so as to be lower than a frequency at which an advertisement is displayed on the terminal 12 of the user 11 who does not accede to a request to perform power control (see the comparative example of FIG. 2). As a specific example to reduce advertisements, the length of each advertisement may be shortened, and the percentage of advertisements allowed to be skipped may be increased. In the example shown in FIG. 2, in the terminal 12 of the user 11 who accedes to a request to perform power control, each of an advertisement to be displayed at the beginning of a video (main part) during normal times (comparative example) and an advertisement to be displayed in the middle of a video (main part) during normal times is omitted (controlled to be not displayed).

The processor 101 is configured to increase a degree to which distribution of advertisements is reduced as a degree of contribution of power control with the electrified vehicle 10 increases. The degree of contribution is determined by the processor 101 based on the level of a request to adjust demand and supply of electric power, the amount of charge or discharge (or a charge or discharge time) in power control, the percentage of regenerated energy in the electrified vehicle 10, and the like (described later).

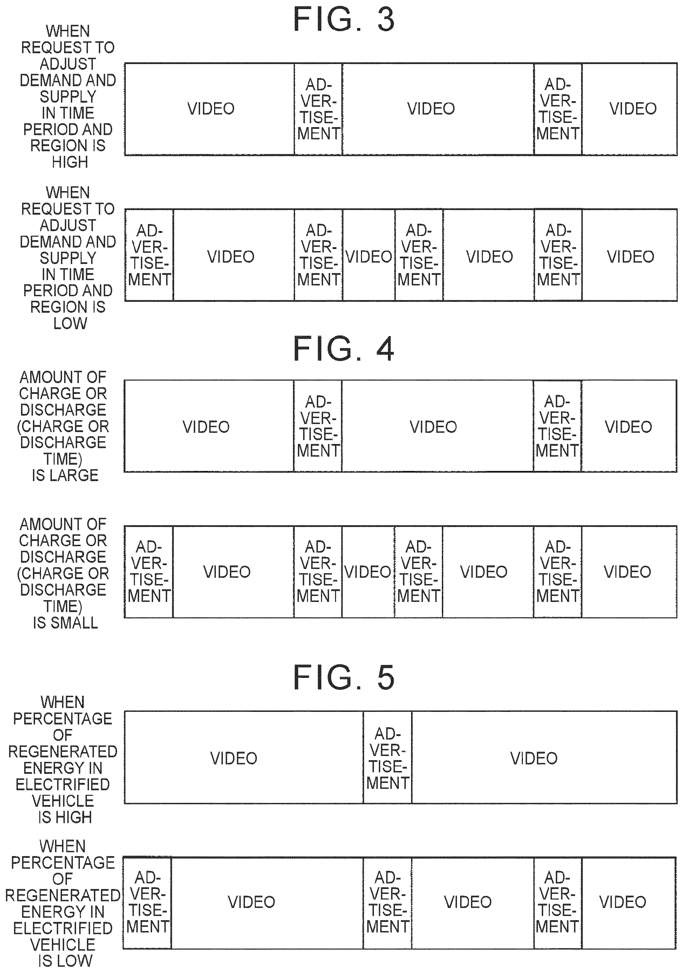

As shown in FIG. 3, the processor 101 is configured to increase a degree to which distribution of advertisements is reduced as a request to adjust demand and supply of electric power in a time period and a region in which power control with the electrified vehicle 10 is performed increases. A state where a request to adjust demand and supply of electric power is high means a state where the electric power of the electric power system PG is tight, a state where there is a lot of redundant electric power in the electric power system PG, or the like. The processor 101 determines the level of a request to adjust demand and supply of electric power based on information sent from the system management server 200.

As shown in FIG. 4, the processor 101 is configured to increase a degree to which distribution of advertisements is reduced as the amount of charge or discharge in power control with the electrified vehicle 10 increases (or a charge or discharge time extends). Specifically, the processor 101 is configured to, when there is redundant electric power in the electric power system PG, increase a degree to which distribution of advertisements is reduced as the amount of charge in power control increases (or a charge time extends). The processor 101 is configured to, when electric power in the electric power system PG is short, increase a degree to which distribution of advertisements is reduced as the amount of discharge in power control increases (or a discharge time extends).

As shown in FIG. 5, the processor 101 is configured to increase a degree to which distribution of advertisements is reduced as the percentage of regenerated energy in electric power stored in the electrified vehicle 10 that performs power control increases. The processor 101 acquires information on the amount of regenerated energy in electric power exchanged in power control between the electrified vehicle 10 and the EVSE 20. The server 100 (processor 101) calculates the percentage of regenerated energy in the electrified vehicle 10 based on information on the amount of regenerated energy. The server 100 stores the calculated percentage of regenerated energy in the memory 102.

The processor 101 may change the degree depending on the type of regenerated energy. For example, energy generated by solar power generation may have a higher degree of contribution to a degree to which distribution of advertisements is reduced than energy generated by wind power generation.

A degree to which distribution of advertisements is reduced may be changed in three or more steps based on at least one of the level of a request to adjust demand and supply of electric power, the magnitude of the amount of charge or discharge (the length of a charge or discharge time) performed by the electrified vehicle 10, and the level of the percentage of regenerated energy in the electrified vehicle 10.

The processor 101 reduces distribution of advertisements during a time period or a period set by the user. In other words, the user of the electrified vehicle 10 is able to determine a time period or a period during which a program based on a program command sent to the distribution management server 300 is applied. A time period or a period during which the program is applied may be divided into multiple time periods or multiple periods.

The server 100 (processor 101) manages a time during which advertisements are reduced by using the program (hereinafter, referred to as a reduction available time). Specifically, the processor 101 determines a reduction available time based on the degree of contribution in power control. The reduction available time may be a constant value regardless of the degree of contribution.

The processor 101 acquires information on the length of time in which a reduction of advertisements is applied (hereinafter, referred to as a reduction execution time). The processor 101 is configured to, when the reduction execution time becomes equal to the reduction available time, eliminate the effect of advertisement reduction through the program.

### Advertisement Reduction Method

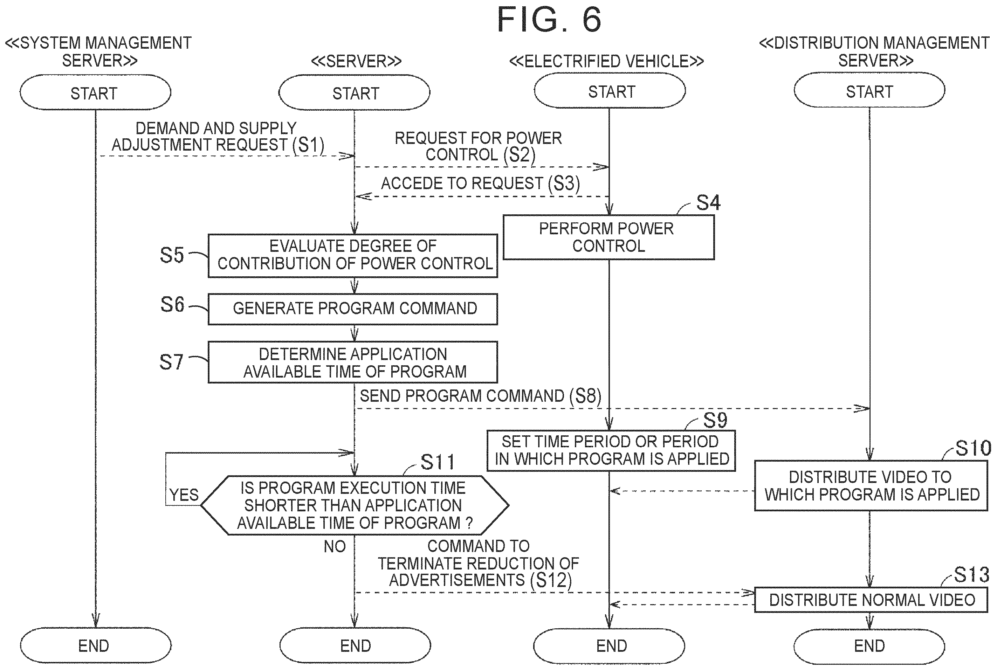

Next, a method of reducing advertisements with the system 1 including the server 100 will be described with reference to the sequence diagram of FIG. 6.

In step S1, the system management server 200 sends a request to adjust demand and supply of electric power to the server 100 (communication unit 103). The system management server 200 sends the request to adjust demand and supply to the server 100 based on generated electric power and consumed electric power of power adjustment resources that the system management server 200 manages.

In step S2, the server 100 (processor 101) makes a request of the user of the electrified vehicle 10 for power control (external charging or external power supply) based on the demand and supply adjustment request received in step S1. The server 100 may directly send a signal inquiring for making a request for power control to the electrified vehicle 10 or may send the signal to the mobile terminal 11a of the user 11.

In step S3, it is assumed that the user 11 sends, to the server 100, an intension to accede (an intension to join power control) to the request for power control, made in step S2.

In step S4, the electrified vehicle 10 starts power control corresponding to the request for power control, made in step S2, by electrically connecting with the EVSE 20.

In step S5, the server 100 evaluates the degree of contribution of the power control performed in step S4. An evaluation method for the degree of contribution of power control is as described above, so the detailed description will not be repeated.

In step S6, the server 100 generates a program command to reduce display of advertisements on the terminal 12.

In step S7, the server 100 determines an application available time of a program (the reduction available time) based on the program command generated in step S6. The processor 101 determines a reduction available time based on the level of the degree of contribution of the power control, calculated in step S5. The processor 101 may extend the reduction available time as the degree of contribution increases. The process of step S7 may be performed before the process of step S6.

In step S8, the server 100 sends the program command generated in step S6 to the distribution management server 300 through the communication unit 103. In step S8, the processor 101 may provide the fact that the program command is generated and information on the reduction available time to the electrified vehicle 10 (user 11). The program command may include information on the reduction available time.

In step S9, the user 11 of the electrified vehicle 10 sets a time period or a period during which the program is applied. For example, the user may be able to set the time period or the period by inputting the time period or the period on an input screen displayed on the terminal 12. In this case, the processor 101 may perform control to display the input screen on the terminal 12.

In step S10, the distribution management server 300 distributes, to the terminal 12, a video in which advertisements are reduced and to which the program is applied.

In step S11, the server 100 determines whether a time (reduction execution time) during which the program is applied is shorter than the reduction available time determined in step S7. When the reduction execution time is shorter than the reduction available time (Yes in S11), the process of step S11 is repeated. When the reduction execution time is equal to the reduction available time (No in S11), the process proceeds to step S12.

In step S12, the server 100 sends a command to terminate a reduction of advertisements, performed by the program, to the distribution management server 300.

In step S13, the distribution management server 300 distributes, to the terminal 12, a normal video in which advertisements are not reduced.

As described above, in the present embodiment, the processor 101 is configured to, when the electrified vehicle 10 accedes to a request to perform power control, generate a program command to reduce display of advertisements on the terminal 12 as compared to when the electrified vehicle 10 does not accede to the request to perform the power control. Thus, it is possible to facilitate the user 11 intended to reduce display of advertisements to perform power control.

In the above-described embodiment, an example in which a degree to which distribution of advertisements is reduced increases as a degree of contribution of power control increases has been described; however, the disclosure is not limited thereto. Regardless of the degree of contribution of power control, the degree for a user who performs power control (who accedes to a request to perform power control) may be constant.

In the above-described embodiment, an example in which distribution of advertisements is reduced during a time period or a period set by the user 11 has been described; however, the disclosure is not limited thereto. A time period or a period during which distribution of advertisements is reduced may be determined by the server 100.

In the above-described embodiment, an example in which a degree to which distribution of advertisements is reduced increases as a request to adjust demand and supply of electric power in a time period or a region in which the power control is performed increases has been described; however, the disclosure is not limited thereto. A degree to which distribution of advertisements is reduced may be increased as a request to adjust demand and supply of electric power in any one of a time period and a region in which power control is performed increases.

In the above-described embodiment, an example in which advertisements in a video are reduced has been described; however, the disclosure is not limited thereto. For example, display of advertisements (banner advertisements or the like) to be displayed on a website other than a video may be reduced.

## Claims

1. A server (100) comprising:
an acquisition unit (103) configured to acquire information on power control including at least one of power supply from an electrified vehicle (10) to an electric power system (PG) and charge from the electric power system (PG) to the electrified vehicle (10); and
a control unit (101) configured to control display during use of an Internet service with a terminal (12) owned by a user (11) of the electrified vehicle (10), wherein
the control unit (101) is configured to generate a program command to reduce display of advertisements on the terminal (12) from a distribution of advertisements from a distribution management server,
**characterized in that**
the control unit (101) is configured to generate the program command when the electric vehicle (10) accedes to a request sent from the server (100) to perform power control as compared to when the electrified vehicle (10) does not accede to the request to perform the power control, and via the program command, to increase a degree to which the distribution of advertisements is reduced as a level of a request to adjust demand and supply of electric power in at least one of a time period and a region in which the power control is performed increases; and as a degree of contribution of the power control with the electrified vehicle (10) increases.

2. The server according to claim 1, wherein the control unit (101) is configured to acquire information on an amount of regenerated energy in electric power exchanged in power control between the electrified vehicle (10) and an electric vehicle supply equipment (20) to calculate the percentage of regenerated energy in electric power stored in the electrified vehicle (10) based on the information on an amount of regenerated energy and to increase a degree to which distribution of the advertisements is reduced as a percentage of regenerated energy in electric power stored in the electrified vehicle (10) that performs the power control increases.

3. The server according to claim 1 or 2, wherein the control unit (101) is configured to reduce the distribution of advertisements in a time period or a period set by the user.

4. A system (1) comprising:
the server (100) according to claim 1 configured to manage the power control; and
a further server (300) configured to manage the distribution of advertisements during the use of an Internet service to receive the program command and to reduce the distribution of advertisements to the terminal (12) based on the program command.

5. A method comprising:
acquiring information on power control including at least one of power supply from an electrified vehicle (10) to an electric power system (PG) and charge from the electric power system (PG) to the electrified vehicle (10); and
controlling display of advertisements during use of an Internet service with a terminal (12) owned by a user (11) of the electrified vehicle (10), generating a program command to reduce display of advertisements on the terminal (12) from a distribution of advertisements from a distribution management server,
**characterized by**
generating the program command when the electric vehicle (10) accedes to a request sent from the server (100) to perform power control as compared to when the electrified vehicle (10) does not accede to the request to perform the power control, and via the program command, to increase a degree to which the distribution of advertisements is reduced as a level of a request to adjust demand and supply of electric power in at least one of a time period and a region in which the power control is performed increases; and as a degree of contribution of the power control with the electrified vehicle (10) increases.

## Patentansprüche

1. Server (100), umfassend:
eine Erfassungseinheit (103), die konfiguriert ist, um Informationen über Energiesteuerung zu erfassen, einschließlich mindestens eines von Energiezufuhr von einem elektrifizierten Fahrzeug (10) zu einem elektrischen Energiesystem (PG) und Ladung von dem elektrischen Energiesystem (PG) zu dem elektrifizierten Fahrzeug (10); und
eine Steuereinheit (101), die konfiguriert ist, um während einer Nutzung eines Internetdienstes mit einem Endgerät (12), das sich im Besitz eines Benutzers (11) des elektrifizierten Fahrzeugs (10) befindet, eine Anzeige zu steuern,
wobei die Steuereinheit (101) konfiguriert ist, um einen Programmbefehl zu erzeugen, um eine Anzeige von Werbung auf dem Endgerät (12) aus einer Verteilung von Werbung von einem Verteilungsmanagementserver zu reduzieren,
**dadurch gekennzeichnet, dass**
die Steuereinheit (101) konfiguriert ist, um den Programmbefehl zu erzeugen, wenn das Elektrofahrzeug (10) einer von dem Server (100) gesendeten Aufforderung zum Durchführen einer Energiesteuerung nachkommt, im Vergleich dazu, wenn das Elektrofahrzeug (10) der Aufforderung zum Durchführen der Energiesteuerung nicht nachkommt, und über den Programmbefehl einen Grad zu erhöhen, in dem die Verteilung von Werbung reduziert wird, wenn ein Niveau einer Anforderung zum Anpassen der Nachfrage und des Angebots von elektrischer Energie in mindestens einer Zeitperiode und einer Region, in der die Energiesteuerung durchgeführt wird, zunimmt und wenn ein Anteil der Energiesteuerung bei dem elektrifizierten Fahrzeug (10) zunimmt.

2. Server nach Anspruch 1, wobei die Steuereinheit (101) konfiguriert ist, um Informationen über eine Menge an regenerierter Energie in elektrischer Energie zu erfassen, die bei der Energiesteuerung zwischen dem elektrifizierten Fahrzeug (10) und einer Elektrofahrzeugversorgungsausrüstung (20) ausgetauscht wird, um den Prozentsatz an regenerierter Energie in elektrischer Energie, die in dem elektrifizierten Fahrzeug (10) gespeichert ist, basierend auf den Informationen über eine Menge an regenerierter Energie zu berechnen und einen Grad zu erhöhen, in dem die Verteilung der Werbung reduziert wird, wenn ein Prozentsatz an regenerierter Energie in elektrischer Energie, die in dem elektrifizierten Fahrzeug (10) gespeichert ist, das die Energiesteuerung durchführt, steigt.

3. Server nach Anspruch 1 oder 2, wobei die Steuereinheit (101) konfiguriert ist, um die Verteilung von Werbung in einem von dem Benutzer festgelegten Zeitraum oder einer von dem Benutzer festgelegten Zeitspanne zu reduzieren.

4. System (1), umfassend:
den Server (100) nach Anspruch 1, der konfiguriert ist, um die Energiesteuerung zu verwalten; und
einen weiteren Server (300), der konfiguriert ist, um die Verteilung von Werbung während der Nutzung eines Internetdienstes zum Empfangen des Programmbefehls zu verwalten und die Verteilung von Werbung an das Endgerät (12) basierend auf dem Programmbefehl zu reduzieren.

5. Verfahren, umfassend:
Erfassen von Informationen über Energiesteuerung, einschließlich mindestens eines von Energiezufuhr von einem elektrifizierten Fahrzeug (10) zu einem elektrischen Energiesystem (PG) und Ladung von dem elektrischen Energiesystem (PG) zu dem elektrifizierten Fahrzeug (10); und
Steuern eines Anzeigens von Werbung während der Nutzung eines Internetdienstes mit einem Endgerät (12), das einem Benutzer (11) des elektrifizierten Fahrzeugs (10) gehört, Erzeugen eines Programmbefehls zum Reduzieren eines Anzeigens von Werbung auf dem Endgerät (12) aus einer Verteilung von Werbung von einem Verteilungsmanagementserver,
**gekennzeichnet durch**:
Erzeugen des Programmbefehls, wenn das Elektrofahrzeug (10) einer von dem Server (100) gesendeten Aufforderung zum Durchführen einer Energiesteuerung nachkommt, im Vergleich dazu, wenn das Elektrofahrzeug (10) der Aufforderung zum Durchführen der Energiesteuerung nicht nachkommt, und über den Programmbefehl einen Grad zu erhöhen, in dem die Verteilung von Werbung reduziert wird, wenn ein Niveau einer Anforderung zum Anpassen der Nachfrage und des Angebots von elektrischer Energie in mindestens einer Zeitperiode und einer Region, in der die Energiesteuerung durchgeführt wird, zunimmt, und wenn ein Anteil der Energiesteuerung bei dem elektrifizierten Fahrzeug (10) zunimmt.

## Revendications

1. Serveur (100) comprenant :
une unité d'acquisition (103) configurée pour acquérir de l'information sur une commande d'énergie comprenant au moins une d'une alimentation en énergie depuis un véhicule électrifié (10) jusqu'à un système d'alimentation électrique (PG) et d'une charge depuis le système d'alimentation électrique (PG) jusqu'au véhicule électrifié (10) ; et
une unité de commande (101) configurée pour commander un affichage pendant l'utilisation d'un service Internet avec un terminal (12) possédé par un utilisateur (11) du véhicule électrifié (10),
l'unité de commande (101) étant configurée pour générer une commande de programme pour réduire l'affichage d'annonces sur le terminal (12) à partir d'une distribution d'annonces provenant d'un serveur de gestion de distribution,
**caractérisé en ce que**
l'unité de commande (101) est configurée pour générer la commande de programme quand le véhicule électrique (10) accède à une demande envoyée depuis le serveur (100) de réaliser une commande d'énergie par contraste avec quand le véhicule électrifié (10) n'accède pas à la demande de réaliser la commande d'énergie, et par l'intermédiaire de la commande de programme, pour augmenter un degré auquel la distribution d'annonces est réduite lorsqu'un niveau d'une demande pour ajuster une demande de et une alimentation en énergie électrique dans au moins une d'une période et d'une zone dans laquelle la commande d'énergie est réalisée augmente et lorsqu'un degré de contribution de la commande d'énergie avec le véhicule électrifié (10) augmente.

2. Serveur selon la revendication 1, dans lequel l'unité de commande (101) est configurée pour acquérir de l'information sur une quantité d'énergie régénérée dans de l'énergie électrique échangée dans la commande d'énergie entre le véhicule électrifié (10) et un équipement d'alimentation de véhicule électrique (20) pour calculer le pourcentage d'énergie régénérée dans de l'énergie électrique stockée dans le véhicule électrifié (10) sur la base de l'information sur une quantité d'énergie régénérée et pour augmenter un degré auquel la distribution des annonces est réduite lorsqu'un pourcentage d'énergie régénérée dans de l'énergie électrique stockée dans le véhicule électrifié (10) qui réalise la commande d'énergie augmente.

3. Serveur selon la revendication 1 ou 2, dans lequel l'unité de commande (101) est configurée pour réduire la distribution d'annonces dans une période de temps ou une période fixée par l'utilisateur.

4. Système (1) comprenant :
le serveur (100) selon la revendication 1 configuré pour gérer la commande d'énergie ; et
un autre serveur (300) configuré pour gérer la distribution d'annonces pendant l'utilisation d'un service Internet pour recevoir la commande de programme et pour réduire la distribution d'annonces vers le terminal (12) sur la base de la commande de programme.

5. Procédé comprenant :
l'acquisition d'information sur une commande d'énergie comprenant au moins une d'une alimentation en énergie depuis un véhicule électrifié (10) jusqu'à un système d'alimentation électrique (PG) et d'une charge depuis le système d'alimentation électrique (PG) jusqu'au véhicule électrifié (10) ; et
la commande d'affichage d'annonces pendant l'utilisation d'un service Internet avec un terminal (12) possédé par un utilisateur (11) du véhicule électrifié (10), en générant une commande de programme pour réduire l'affichage d'annonces sur le terminal (12) à partir d'une distribution d'annonces provenant d'un serveur de gestion de distribution,
**caractérisé par**
la génération de la commande de programme quand le véhicule électrique (10) accède à une demande envoyée depuis le serveur (100) pour réaliser une commande d'énergie par contraste avec à quand le véhicule électrifié (10) n'accède pas à la demande de réaliser la commande d'énergie, et par l'intermédiaire de la commande de programme, pour augmenter un degré auquel la distribution d'annonces est réduite lorsqu'un niveau d'une demande d'ajustement de demande de et d'alimentation en énergie électrique dans au moins une d'une période et d'une zone dans laquelle la commande d'énergie est réalisée augmente et lorsqu'un degré de contribution de la commande d'énergie avec le véhicule électrifié (10) augmente.
